# EUROPÄISCHE PATENTANMELDUNG

(11) **EP 0 962 358 A2**
(43) Veröffentlichungstag der Anmeldung: **08.12.1999**
(21) Anmeldenummer: 99110646.9
(22) Anmeldetag: 02.06.1999
(51) Int. Cl.: B60Q 1/10

(54) **Verfahren zur Regelung der Leuchtweite von Fahrzeugscheinwerfern**

(30) Priorität: 04.06.1998 DE 19824862
(71) Anmelder: Hella KG Hueck & Co., 59552 Lippstadt (DE)
(72) Erfinder: Kasprzok, Ralf, 33428 Harsewinkel (DE); Lammers, Christian, 59494 Soest (DE); Marek, Karsten, 45663 Recklinghausen (DE)

(57) **Zusammenfassung**

Bei einem Verfahren zur Regelung der Leuchtweite von Fahrzeugscheinwerfern, bei dem die Regelung aufgrund der Lage der Karosserie zur Fahrbahn erfolgt und die Regelung mindestens einen schnellen und mindestens einen langsamen Regelmodus aufweist, wobei die Umschaltung von einem langsamen Regelmodus in einen schnellen Regelmodus abhängig von der Längsbeschleunigung des Fahrzeuges erfolgt, wird im Sinne einer bestmöglichen Konstanthaltung der Leuchtweite nur dann von einem langsamen Regelmodus in einen schnellen Regelmodus umgeschaltet, wenn der Betrag der Änderung der Längsbeschleunigung einen vorgegebenen Schwellwert überschreitet.

## Beschreibung

Die Erfindung betrifft ein Verfahren zur Regelung der Leuchtweite von Fahrzeugscheinwerfern, bei dem die Regelung aufgrund der Lage der Karosserie zur Fahrbahn erfolgt und die Regelung mindestens einen schnellen und mindestens einen langsamen Regelmodus aufweist, wobei die Umschaltung von einem langsamen Regelmodus in einen schnellen Regelmodus abhängig von der Längsbeschleunigung des Fahrzeugs erfolgt.

Aus der Europäischen Patentschrift EP 0 355 539 B1 ist ein Verfahren zur Regelung der Leuchtweite eines Fahrzeuges bekannt, bei dem beispielhaft über Niveaugeber die relative Stellung der Fahrzeugkarosserie zu einer Achse, und damit die Lage der Fahrzeugkarosserie zur Fahrbahn, ermittelt wird. Diese Signale werden durch eine Mittelwertbildung gefiltert, wobei unterschiedliche Filterzeitkonstanten für die Mittelwertbildung vorgesehen sind. Demgemäß kann die Regelung der Leuchtweite in mindestens einem schnellen und mindestens einem langsamen Regelmodus durchgeführt werden. Die Umschaltung zwischen den schnellen und langsamen Regelmodi erfolgt in Abhängigkeit der gemessenen positiven oder negativen Beschleunigung des Fahrzeuges. Ziel einer solchen dynamischen Leuchtweiteregelung besteht darin, die Scheinwerferposition und damit die Leuchtweite vor dem Fahrzeug entsprechend der Karosserieneigung durch Beladung, Beschleunigung und Bremsen auszuregeln. Die Umschaltung auf langsame Regelmodi hat dabei zum Ziel, daß bei kontinuierlicher Fahrt ohne wesentliche Karosserieneigungen Unebenheiten in der Fahrbahn, z. B. Schlaglöcher, möglichst nicht ausgeregelt werden sollen. Bei dem bekannten Verfahren erweist sich dabei als nachteilig, daß bei der längsbeschleunigungsabhängigen Umschaltung der Regelmodi, z. B. auch bei einer kontinuierlichen Beschleunigung des Fahrzeugs, bei der keine Neigungsänderung der Karosserie vorliegt, ein schneller Regelmodus gewählt wird, so daß während einer solchen Beschleunigung in der Fahrbahn auftretende Unebenheiten wie Schlaglöcher zu einer Verstellung der Scheinwerferposition und damit zu einer Verstellung der Leuchtweite führen, wodurch eine unruhige Bewegung der Hell-Dunkel-Grenze der Lichtverteilung der Scheinwerfer erzeugt wird und eine Irritation des Fahrzeugführers herbeigeführt werden kann.

Aus der Europäischen Patentschrift EP 0 470 407 B1 ist eine Einrichtung zur Regelung der Leuchtweite eines Kraftfahrzeuges bekannt, die nach dem gleichen Grundprinzip arbeitet, wie aus der EP 0 355 539 B1 vorab geschildert, mit dem Unterschied, daß die Umschaltung der Regelmodi aufgrund eines Bremseingriffes erfolgt. Neben den zuvor geschilderten Nachteilen erweist sich bei dieser Einrichtung als besonders nachteilig, daß nur negative Beschleunigungen für die Umschaltung der Regelmodi berücksichtigt werden.

Aus der Europäischen Patentschrift EP 0 709 240 B1 ist eine dynamische Leuchtweitenregelung bekannt, bei der die Veränderung der Lage der Fahrzeugkarosserie allein aufgrund der Änderung der Längsbeschleunigung bzw. Verzögerung des Fahrzeuges ermittelt und in eine Verstellung der Scheinwerfer umgesetzt wird. Bei einem solchen System zur Regelung der Leuchtweite erweist sich als nachteilig, daß die Lage der Fahrzeugkarosserie zur Fahrbahn nur indirekt bestimmt werden kann und somit ein großer Fehler bei der Leuchtweitenregelung auftritt.

Der Erfindung liegt die Aufgabe zugrunde, die vorgenannten Nachteile zu vermeiden und ein Verfahren zur Regelung der Leuchtweite von Fahrzeugscheinwerfern bereitzustellen, bei dem, angepaßt an das dynamische Verhalten des Fahrzeuges und die Regelmöglichkeiten des Regelungssystems, eine bestmögliche Konstanthaltung der Leuchtweite erzielt wird.

Die Aufgabe wird durch die Merkmale des Anspruchs 1 gelöst.

Es ist von Vorteil, daß die Umschaltung von einem langsamen Regelmodus in einen schnellen Regelmodus dann erfolgt, wenn der Betrag der Änderung der Längsbeschleunigung einen vorgegebenen Schwellwert überschreitet, weil auf diese Art und Weise erreicht wird, daß nur dann ein schneller Regelmodus eingeschaltet wird, wenn tatsächlich eine sich auf die Leuchtweite auswirkende Neigungsänderung der Karosserie des Fahrzeugs durch einen negativen oder positiven Beschleunigungsvorgang vorliegt.

Dadurch daß die Umschaltung auf einen schnellen Regelmodus für eine begrenzte Dauer erfolgt, wird zudem sichergestellt, daß ein schneller Regelmodus nur für den Zeitraum aktiviert wird, in dem die Leuchtweite beeinflussende Neigungsänderungen der Karosserie vorliegen, und somit vermieden wird, daß bei einer kontinuierlichen Beschleunigung des Kraftfahrzeuges auftretende Unebenheiten der Fahrbahn, wie z. B. Schlaglöcher, das Regelverhalten negativ beeinflussen.

Dadurch daß die Umschaltung auf den schnellsten Regelmodus erfolgt, wird gewährleistet, daß bei einer negativen oder positiven Beschleunigung des Fahrzeuges, die zu einer Neigungsänderung der Karosserie führt, diese Neigungsänderung im Sinne der Konstanthaltung der Leuchtweite schnellstmöglichst ausgeregelt wird.

Es ist von Vorteil, daß die Umschaltung auf einen schnellen Regelmodus schrittweise oder kontinuierlich erfolgt, damit bei der Ausregelung der Karosserieneigungen ein sanfter Regelungsübergang gewährleistet wird und der Fahrer keine Sprünge der Hell-Dunkel-Grenze der Lichtverteilung wahrnimmt, die ihn irritieren könnten.

Es ist von Vorteil, daß die schrittweise Umschaltung auf schnelle Regelmodi in Abhängigkeit von dem Überschreiten vorgegebener Schwellwerte für den Betrag der Änderung der Längsbeschleunigung des Fahrzeuges erfolgt, weil somit eine bestmögliche Anpassung der Regelung an die Fahrzeugdynamik ermöglicht wird.

Dadurch daß der schnelle Regelmodus so lange beibehalten wird, bis der zugehörige Schwellwert für den Betrag der Änderung der Längsbeschleunigung unterschritten wird, ergibt sich der Vorteil, daß der schnelle Regelmodus nur so lange aktiv ist, wie auch auszuregelnde Neigungsänderungen der Karosserie des Fahrzeuges vorliegen. Dadurch daß der jeweilige schnelle Regelmodus über eine diesem zugeordnete feste Nachlaufzeit beibehalten wird, ergibt sich der Vorteil einer besonders einfach durchzuführenden Regelung der Leuchtweite.

Es ist von Vorteil, die Umschaltung auf einen langsamen Regelmodus schrittweise oder kontinuierlich erfolgen zu lassen, um einen sanften Regelübergang auf einen langsamen Regelmodus durchführen zu können und um ruckartige Veränderungen der Hell-Dunkel-Grenze der Lichtverteilung vor dem Fahrzeug vermeiden zu können.

Erfolgt die schrittweise Umschaltung auf einen langsamen Regelmodus in Abhängigkeit von vorgegebenen Nachlaufzeiten, ergibt sich eine besonders einfache Art der Regelung bzw. Regelungsanpassung.

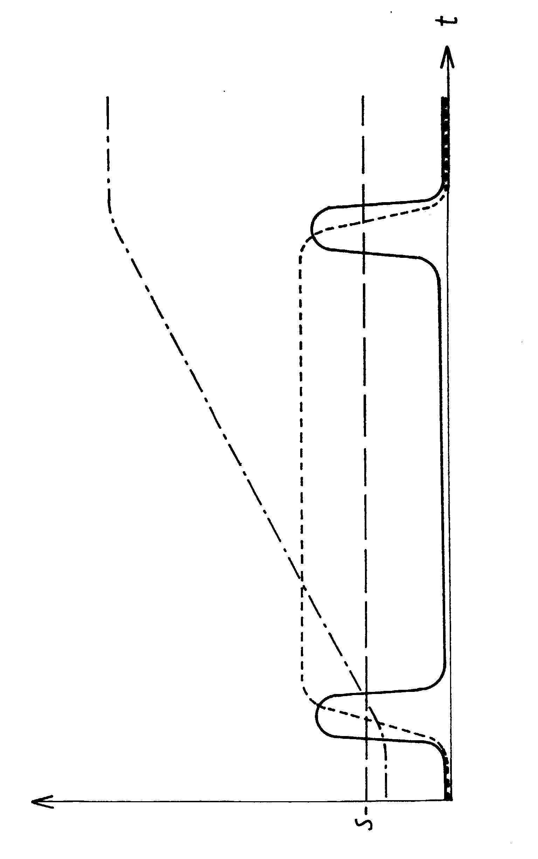

Es folgt eine kurze Beschreibung eines Ausführungsbeispiels unter Heranziehung der einzigen Zeichnung.

Bei einem erfindungsgemäßen Verfahren zur Regelung der Leuchtweite von Fahrzeugscheinwerfern wird die Lage der Karosserie des Fahrzeuges zur Fahrbahn bestimmt. Dies kann über Neigungssensoren erfolgen, die zwischen der Fahrzeugkarosserie und der Fahrzeugachse angeordnet sind, oder z. B. auch über optische oder akustische Sensoren. Die ermittelten Signale geben die Neigungsänderungen der Fahrzeugkarosserie zur Fahrbahnoberfläche wieder. Um eine ruhige Anpassung der Leuchtweite der Fahrzeugscheinwerfer, das heißt der Lage der Hell-Dunkel-Grenze der Lichtverteilung vor dem Fahrzeug, zu ermöglichen, wird, angepaßt an die fahrdynamischen Zustände des Fahrzeuges, wie aus der EP 0 355 539 B1 oder der EP 0 470 407 B1 bekannt, eine durch Mittelwertbildung bedingte Filterung der Neigungssignale durchgeführt. Diese gefilterten Signale dienen dann zur Ansteuerung von Stellelementen, die die Scheinwerferposition im Sinne einer Konstanthaltung der Leuchtweite verstellen. Bei dieser Art der Regelung hat es sich als vorteilhaft erwiesen, damit bestmöglich alle Neigungsänderungen der Karosserie, die sich auf die Leuchtweite auswirken und z. B. durch eine Beladungsänderung oder eine positive oder negative Beschleunigung bedingt sind, ausgeregelt werden können, ohne daß eine unruhige Bewegung, der die Hell-Dunkel-Grenze bestimmenden Leuchtweite entsteht, bei Fahrbeginn einen möglichst schnellen Regelmodus zu verwenden und diesen schnellen Regelmodus abhängig von der Fahrsituation bei kontinuierlicher Fahrt, die keine wesentlichen Neigungsänderungen der Karosserie beinhaltet, auf langsamere Regelmodi umzuschalten. Hierdurch wird nicht nur eine beruhigte Ausregelung der Leuchtweite im Sinne einer Konstanthaltung bewirkt, sondern es wird auch die Lebensdauer der mechanischen Komponenten erhöht, die in den Regelungsvorgang mit eingreifen.

Wesentliche Neigungsänderungen der Fahrzeugkarosserie während der Fahrt, d. h. bei Geschwindigkeiten > 0, entstehen durch positive oder negative Beschleunigungsvorgänge. Aus diesem Grund wird bei den bekannten Verfahren zur Regelung bei dem Auftreten einer positiven oder negativen Beschleunigung der bei konstanter Fahrgeschwindigkeit eingeschaltete langsame Regelmodus auf einen schnellen Regelmodus umgeschaltet. Das der einzigen Zeichnung entnehmbare Diagramm zeigt die Abhängigkeit zwischen der Geschwindigkeit (strichpunktiert), der Beschleunigung (gestrichelt) und der Beschleunigungsänderung (durchgezogene Linie) in Abhängigkeit von der Zeit (t). Beispielhaft ist zudem ein Schwellwert (S) eingezeichnet. Das Geschwindigkeitssignal wird bei dem Fahrzeug z. B. aus dem Tachosignal oder aus dem ABS-Signal ermittelt. Die Beschleunigung wird in bekannter Weise aus der Geschwindigkeit abgeleitet und die Beschleunigungsänderung wird ermittelt, indem der Betrag der Differenz zwischen dem momentanen Wert und dem Mittelwert der Beschleunigung gebildet wird. Bei dem erfindungsgemäßen Verfahren erfolgt die Umschaltung von einem langsamen Regelmodus, der z. B. bei einer Fahrt mit konstanter Geschwindigkeit aktiviert worden ist, in einen schnellen Regelmodus nur dann, wenn der Betrag der Änderung der Längsbeschleunigung einen vorgegebenen Schwellwert überschreitet. Hierbei wird die Dauer der Umschaltung auf den schnellen Regelmodus begrenzt. Wie aus dem Diagramm ersichtlich, ist eine Neigungsänderung der Fahrzeugkarosserie nur über den Zeitraum zu erwarten, in dem eine Beschleunigungsänderung des Fahrzeuges vorliegt. Betrachtet man die Beschleunigung des Fahrzeuges zwischen den in dem Diagramm aufgezeigten beiden Beschleunigungsänderungen, so ist diese im wesentlichen konstant. In diesem Bereich treten keine beschleunigungsbedingten Änderungen der Neigung der Karosserie auf, die ausgeregelt werden müßten. Bei dem vorliegenden Ausführungsbeispiel wird die Regelung bei dem Überschreiten des Schwellwertes (S) auf den schnellsten Regelmodus umgeschaltet. Die Umschaltung auf den schnellsten Regelmodus kann dabei schrittweise oder kontinuierlich erfolgen. Erfolgt eine schrittweise Umschaltung auf den schnellsten Regelmodus, so kann dies in Abhängigkeit von dem Überschreiten vorgegebener Schwellwerte (S) erfolgen, die zum Beispiel fahrzeugabhängig oder regelungsabhängig gewählt werden können. Der schnelle Regelmodus wird so lange beibehalten, bis der zugehörige Schwellwert für den Betrag der Änderung der Längsbeschleunigung unterschritten wird. Bei einem anderen Ausführungsbeispiel kann der jeweilige schnelle Regelmodus über eine diesem zugeordnete feste Nachlaufzeit beibehalten werden. Die Umschaltung auf einen langsamen Regelmodus kann dabei schrittweise oder kontinuierlich erfolgen. Auch diese schrittweise Umschaltung auf einen langsamen Regelmodus kann dabei in Abhängigkeit von vorgegebenen Nachlaufzeiten erfolgen.

Durch diese Möglichkeit, sanfte Übergänge in dem Regelungsverfahren bereitzustellen, ergibt sich eine hohe Variabilität bei der Regelung der Leuchtweite, da z. B. bei einer kurzen Aufeinanderfolge von Beschleunigungsänderungen, die die vorgegebenen Schwellwerte (S) überschreiten, kein hektisches Umschalten des Regelmodus erfolgt, sondern sanfte Übergänge gewährleistet werden, die die Lage der Leuchtweite nicht negativ beeinflussen.

## Patentansprüche

1. Verfahren zur Regelung der Leuchtweite von Fahrzeugscheinwerfern, bei dem die Regelung aufgrund der Lage der Karosserie zur Fahrbahn erfolgt und die Regelung mindestens einen schnellen und mindestens einen langsamen Regelmodus aufweist, wobei die Umschaltung von einem langsamen Regelmodus in einen schnellen Regelmodus abhängig von der Längsbeschleunigung des Fahrzeugs erfolgt, dadurch gekennzeichnet, daß die Umschaltung von einem langsamen Regelmodus in einen schnellen Regelmodus dann erfolgt, wenn der Betrag der Änderung der Längsbeschleunigung einen vorgegebenen Schwellwert überschreitet.

2. Verfahren nach Anspruch 1, dadurch gekennzeichnet, daß die Umschaltung auf einen schnellen Regelmodus für eine begrenzte Dauer erfolgt.

3. Verfahren nach Anspruch 1 oder Anspruch 2, dadurch gekennzeichnet, daß die Umschaltung auf den schnellsten Regelmodus erfolgt.

4. Verfahren nach Anspruch 2 oder Anspruch 3, dadurch gekennzeichnet, daß die Umschaltung auf einen schnellen Regelmodus schrittweise oder kontinuierlich erfolgt.

5. Verfahren nach Anspruch 4, dadurch gekennzeichnet, daß die schrittweise Umschaltung auf schnelle Regelmodi in Abhängigkeit von dem Überschreiten vorgegebener Schwellwerte für den Betrag der Änderung der Längsbeschleunigung des Fahrzeuges erfolgt.

6. Verfahren nach einem der vorstehenden Ansprüche, dadurch gekennzeichnet, daß der schnelle Regelmodus so lange beibehalten wird, bis der zugehörige Schwellwert für den Betrag der Änderung der Längsbeschleunigung unterschritten wird.

7. Verfahren nach einem der vorstehenden Ansprüche, dadurch gekennzeichnet, daß der jeweilige schnelle Regelmodus über eine diesem zugeordnete feste Nachlaufzeit beibehalten wird.

8. Verfahren nach Anspruch 6 oder Anspruch 7, dadurch gekennzeichnet, daß die Umschaltung auf einen langsamen Regelmodus schrittweise oder kontinuierlich erfolgt.

9. Verfahren nach Anspruch 8, dadurch gekennzeichnet, daß die schrittweise Umschaltung auf einen langsamen Regelmodus in Abhängigkeit von vorgegebenen Nachlaufzeiten erfolgt.
